# EUROPÄISCHE PATENTSCHRIFT

(11) **EP 2 665 780 B1**
(45) Veröffentlichungstag und Bekanntmachung des Hinweises auf die Patenterteilung: **24.12.2014**
(21) Anmeldenummer: 12708295.6
(22) Anmeldetag: 06.03.2012
(51) Int. Cl.: C09D 1/02, C09D 7/12, C09D 5/02

(54) **VERWENDUNGSFERTIGE INNENRAUMBESCHICHTUNGSZUSAMMENSETZUNG**
READY-TO-USE INTERIOR COATING COMPOSITION
COMPOSITION DE REVÊTEMENT INTÉRIEUR PRÊTE À L'EMPLOI

(30) Priorität: 07.04.2011 AT 4952011
(43) Veröffentlichungstag der Anmeldung: 27.11.2013
(73) Patentinhaber: Baumit Beteiligungen GmbH, 2754 Waldegg (AT)
(72) Erfinder: LORENZ, Jürgen, A-2700 Neustadt (AT); CHAJDAS, Agathe, Irene, A-2700 Wiener Neustadt (AT)
(74) Vertreter: Sonn & Partner Patentanwälte
(86) Internationale Anmeldenummer: PCT/EP2012/053778
(87) Internationale Veröffentlichungsnummer: WO 2012/136430

(56) Entgegenhaltungen:
- EP-A1- 1 640 419
- US-A- 3 116 827
- DATABASE WPI Week 200436 Thomson Scientific, London, GB; AN 2004-379757 XP002676707, & JP 2004 067981 A (MIURA H) 4. März 2004 (2004-03-04) in der Anmeldung erwähnt
- DATABASE WPI Week 201009 Thomson Scientific, London, GB; AN 2009-Q11571 XP002676708, & KR 2009 0105604 A (KOREA INST CONSTR TECHNOLOGY) 7. Oktober 2009 (2009-10-07)

## Beschreibung

Die vorliegende Erfindung betrifft eine verwendungsfertige Innenraumbeschichtungs-zusammensetzung umfassend ein polydisperses anorganisches Kolloid, ein Bindemittel, Wasser als Lösungs- bzw. Dispersionsmittel und gegebenenfalls herkömmliche Hilfs- und Zusatzstoffe, eine unter Verwendung dieser verwendungsfertigen Innenraumbeschichtungszusammensetzung hergestellte Innenraumbeschichtung sowie eine tafelförmige Innenraumbeschichtung umfassend ein anorganisches Kolloid, ein Bindemittel und gegebenenfalls herkömmliche Hilfs- und Zusatzstoffe.

Als Kolloide werden im Stand der Technik Teilchen oder Tröpfchen bezeichnet, die in einem anderen Medium, dem sogenannten Dispersionsmedium, fein verteilt sind. Grundsätzlich kann sowohl die disperse Phase als auch das Dispersionsmedium ein Feststoff, eine Flüssigkeit oder ein Gas sein. Zielführender als eine starre Definition, die ohnehin nur sehr unscharf sein könnte, ist eine Auflistung von Beispielen. Bei allen folgenden Systemen handelt es sich um Kolloidsysteme:
- Milch, Blut, Mayonnaise, Kosmetika (Emulsionen, Flüssigkeit in Flüssigkeit)
- Tinte, Schlamm, Blut, kolloidales Gold oder kolloidales Silber (Feststoff in Flüssigkeit, auch kolloidale Suspensionen)
- Schlagobers (Gas in Flüssigkeit)
- Schaumstoff, Milchquarz (Gas in Feststoff)
- Spezielle Verbundwerkstoffe, Opalglas (Feststoff in Feststoff)
- Rauch (Feststoff in Gas)
- Nebel (Flüssigkeit in Gas)

Kolloiddispersionen in Gasen (Rauch, Nebel) nennt man auch Aerosole. Kolloidale Lösungen stehen zwischen echten Lösungen (molekulardispers) und Suspensionen (grob dispers). Ist dabei die Konzentration der dispersen Phase so hoch, dass keine bzw. nur eine sehr geringe Fließfähigkeit vorliegt, spricht man von einer Paste. Handelt es sich statt einzelner Partikel um langkettige Makromoleküle, wie zum Beispiel bei Gelee oder Leim, so bezeichnet man dies als Gel. Bilden Kolloide in einer Flüssigkeit geordnete Strukturen, spricht man von Flüssigkristallen.

Disperse Systeme mit annähernd gleicher Teilchengröße werden als monodispers oder isodispers, solche mit unterschiedlicher Teilchengröße als polydispers bezeichnet. Sind disperse Phase und Dispersionsmittel klar zu unterscheiden, handelt es sich um ein einfaches Kolloid. Bilden sie jedoch ineinander verschlungene Netzwerke, ohne eine klare Möglichkeit der Zuordnung, spricht man von Netzwerk-Kolloiden.

Die Größenordnung von Kolloiden kann sich nur auf eine Dimension beziehen, so dass man auch in der Struktur von Kolloiden differenzieren kann. Das Mineral Kaolinit (der Hauptbestandteil des Gesteins Kaolin) ist ein Beispiel für ein sehr dünnplattiges Tonmineral und bildet daher auch ein kolloidales System. Dies gilt auch für faser- oder netzwerkartige Strukturen, die in zwei Raumrichtungen kolloidale Dimensionen aufweisen, Kolloide müssen daher nicht zwangsläufig aus einzelnen Partikeln bestehen. Etwas markanter ist die Untergrenze von etwa einem Nanometer, da es hier zu einem recht einheitlichen Übergang hin zu den Eigenschaften molekular-disperser Systeme kommt.

Chemisch betrachtet sind Ionen Moleküle, die entweder mindestens ein Elektron verloren oder hinzubekommen haben. Aufgrund dieses Polarisierungsvorganges sind sie entweder positiv oder negativ geladen. In der Natur befinden sich in einem Kubikzentimeter Luft je nach Umgebung in der Regel zwischen 0 und 50.000 Paare negativ und positiv geladener Ionen im Verhältnis von 0:1 bis 1,4:1. Dieses Verhältnis kippt in geschlossenen Räumen erheblich zugunsten der positiv geladenen Ionen um.

Da sich Ionen in Abhängigkeit von ihrer Ladung an jeweils entgegengesetzt geladene Partikel, beispielsweise insbesondere negative Ionen an Aerosole oder Staubpartikel in der Luft, binden können, werden sie schwerer als die sie umgebende Luft, backen zu Clustern (Groß-Ionen) zusammen und fallen aus. Dank dieser Eigenschaften werden durch negative Ionen auch umherschwebende Bakterien, Viren, Pollen, Pilzsporen, gasförmige Schadstoffe (z. B. Formaldehyd) und Rauchpartikel auf gleiche Weise eliminiert. Dies hat allerdings zur Folge, dass mit den beseitigten Partikeln auch gleichzeitig die Anzahl der in der Luft vorhandenen Ionen schwindet. Was direkt am Meer, im Gebirge oder an Wasserfällen kein Problem darstellt - denn hier werden durch natürliche Vorgänge laufend Ionen nachproduziert - bedeutet in geschlossenen Räumen einen wesentlichen und mitunter gefährlichen Verlust. Statische Aufladungen durch Kunststoffflächen und Synthetikfasern wirken zudem kontraproduktiv und dezimieren zusätzlich die Anzahl an geladenen Ionen in der Raumluft.

Schon lange gibt es daher die Idee, zur Verbesserung der Raumluft in geschlossenen Räumen diese mit geladenen Ionen anzureichern. Bisher kamen allgemein zur Herstellung von Ionen sogenannte lonisatoren zum Einsatz, diese arbeiten entweder mit Hochspannung von einigen tausend Volt und einer Koronaentladung an Spitzen, oder sie enthalten Quellen ionisierender Strahlung (wie Ultraviolettstrahler oder radioaktive Isotope). Die erreichbaren Ströme betragen meist etwa 1 µA, das entspricht einigen Milliarden Ionen pro Sekunde. Geräte zur Ionisierung der Raumluft gibt es als Kleingerät mit geringer Leistung, wobei für solche Geräte jedenfalls eine staubbindende Wirkung nachgewiesen werden kann. Nachteilig hierbei ist jedoch jedenfalls der mit dem Betrieb der Geräte verbundene Energieverbrauch, bei vielen Gerätetypen auch die Bildung von Ozon sowie naturgemäß auch eine räumliche Beschränkung im Wirkungsbereich der Geräte.

Die Ionisation von Gasen durch ultraviolette Strahlung wurde von Philipp Eduard Anton von Lenard entdeckt. Ihm sind herausragende Arbeiten zur modernen Festkörper- und Atomphysik zu verdanken, wofür er 1905 den Nobelpreis für Physik erhielt. Neben der Wirkung von ultravioletter Strahlung beschäftigte sich Lenard auch mit der Trennung elektrischer Ladungen beim Zerstäuben von Flüssigkeiten, der so genannten Balloelektrizität. Nach Lenard sind Wassertropfen durch molekulare Wechselwirkung mit der umgebenden Luft polarisiert: negative Ladungen sammeln sich an der Oberfläche, positive Ladungen im Innern. Bei einem Aufprall wird die Oberfläche abgerissen und zerstäubt als kleine Tröpfchen, die in die Luft abgegeben werden, während der positiv geladene Haupttropfen zerfließt. Es ist somit unter Ausnutzung des Lenardeffekts auch möglich, ohne unmittelbaren Energieaufwand Ionen zu erzeugen und damit insbesondere die Luft in geschlossenen Räumen zu verbessern. Voraussetzung hierfür ist jedenfalls eine ausreichende Luftfeuchtigkeit, also die Anwesenheit winziger Wassertropfen in Form eines Aerosols in der zu verbessernden Luft, sowie eine Möglichkeit, die an der Oberfläche der Wassertropfen vorhandene negative Ladung derart zu verschieben, dass dadurch Anionen, also negativ geladene Teilchen, generiert werden können.

In H. Titel, Lehrbuch der Lacke und Beschichtungen, Bd. II, wird Verwendung von Talk in mikronisierter Form als Füllstoff für die Lack-, Zellstoff- und Papiertechnologie in allgemeiner Form geoffenbart.

Die EP 1 908 803 A2 betrifft eine möglichst kostengünstige Alternative zur Verwendung von Glimmer oder spezieller Additive bzw. Bindemitteln in Farbe, Papier, Kunststoff und/oder Effektpigmenten, welche zudem Risse in der Oberflächenbeschichtung verhindert und zugleich zu verbesserten optischen Werten beiträgt. Als Alternative zu Glimmer wird die Verwendung von Kaolin in Form grobflächiger, dünner, plättchenartiger Partikel mit einem mittleren Durchmesser von 1 bis 40 µm, bevorzugt 1,5-3 µm, vorgeschlagen. Die geoffenbarten Mischungen enthalten jeweils 28 % Bindemittel und 20 bzw. 40 % Kaolin V9 oder 21 % Bindemittel und 7,5 bzw. 10 % kalziniertes Kaolin.

Die CA 2269410 A1 beschreibt eine Pigmentaufschlämmung, die zum Strecken von Titandioxid verwendet werden kann: Als Pigmente werden Schichtsilikate geoffenbart, welche von 20-55 % Masse der Aufschlämmung in einer mittleren Teilchengröße von etwa 0,7 bis etwa 6 µm, von 15-60 % Masse in einer mittleren Teilchengröße von etwa 3,0 bis etwa 10,0 µm und von 0 bis etwa 50 % Masse in einer mittleren Teilchengröße von etwa 0,2 bis etwa 1,0 µm ausmachen. Da die Aufschlämmung zur Zumischung in Beschichtungszusammensetzungen vorgesehen ist, fehlen jegliche Bindemittel.

Die CN 1307077 A offenbart die Verwendung von Turmalinpulver (100 Mesh und größer) als Quelle von Infrarotstrahlung und negativen Sauerstoffionen zur Verbesserung der Luftqualität. Dem Turmalinpulver kann gegebenenfalls Titanpigment, Talkpulver und Füllstoffe zugegeben werden.

Die CN 101457057 A sieht vor, dass negative Ionen und Strahlung im fernen Infrarotbereich durch eine Wandfarbe vorgesehen werden, welche ein bei Baotou City in der Inneren Mongolei vorkommendes Mineral enthält, welches Mineral in seinem Zentrum einen "Li-Zegang-Ring" enthält. Weiters soll die Wandfarbe einen photochemischen Katalysator enthalten.

Die JP 2004067981 A offenbart ein Verhältnis zwischen Schichtsilikate (z.B. Kaolinit) und Bindemittel als Trockensubstanz von 15-30 %-Masse Kaolinit und 15-25 %-Masse wasserlösliches Acrylharzpulver (als Bindemittel). Kaolinit wird darüber hinaus lediglich als Hilfsmittel vorgesehen, wobei die eigentliche reinigende Wirkung der Innenraumfarbe durch Verwendung von künstlichem Zeolith als Absorptionsmittel bzw. Feuchtigkeitsregulator vorgesehen werden soll.

Die CN 101245211 A offenbart einen Gehalt an 40-55 Gewichtsteilen Acrylatemulsion (also eines Bindemittels).

Die CN 101338101 A1 beschreibt die Zusammensetzung einer Nano-Innenraumbeschichtung mit einem Anteil an gebranntem Kaolin von 28% bis 42% zur kontinuierlichen Freisetzung negativer Ionen unter Bestrahlung mit einer fluoreszierenden Lampe.

Die Aufgabe der vorliegenden Erfindung besteht somit darin, ausgehend vom allgemeinen Stand der Technik eine verwendungsfertige Innenraumbeschichtungszusammensetzung bereitzustellen, welche im getrockneten Zustand, also nach Auftragen auf eine Wand, ohne unmittelbaren Energieaufwand durch Ladungsverschiebung Ionen freisetzen kann.

Diese Aufgabe wird erfindungsgemäß dadurch gelöst, dass die verwendungsfertige Innenraumbeschichtungszusammensetzung umfassend ein polydisperses anorganisches Kolloid, ein Bindemittel, Wasser als Lösungs- bzw. Dispersionsmittel und gegebenenfalls herkömmliche Hilfs- und Zusatzstoffe, dadurch gekennzeichnet ist, dass das anorganische Kolloid ausgewählt ist aus der Gruppe der ungebrannten Schichtsilikate, umfassend Kaolinit, Serpentin, Montmorillonit und Glimmer, wie beispielsweise Muskovit, Celadonit, Annit, Phlogopit, Illit, Glaukonit, Biotit und Lepidolith, sowie Kombinationen hiervon und eine Teilchengröße d-50% von zwischen 1 und 30 µm, vorzugsweise zwischen 5 und 15 µm, und eine relativen Permittivität von 5 bis 30 im Frequenzbereich von 1 MHz - 200 MHz, gemessen im Bulk nach Konditionierung bei 25 °C und 30% relativer Luftfeuchtigkeit, aufweist und das Masseverhältnis zwischen anorganischem Kolloid und Bindemittel als Trockensubstanz größer als 2,5 zu 1 ist. Die Kombination der bestimmten Teilchengröße des Kolloid mit einer bestimmten relativen Permittivität und einem bestimmten Masseverhältnis zwischen anorganischem Kolloid und Bindemittel ergibt den einzigartigen Effekt, dass Raumluft bei Kontakt mit der getrockneten Beschichtung plötzlich eine erhöhte Anzahl von Ionen aufweist. Ohne an eine bestimmte Theorie gebunden zu sein wird vermutet, dass an der Oberfläche der getrockneten Beschichtung vorhandenes polydisperses anorganisches Kolloid mit der bestimmten erfindungsgemäßen relativen Permittivität, vorzugsweise von 10 bis 25 und noch bevorzugter von 15 bis 20 im Frequenzbereich von 1 MHz - 200 MHz, gemessen im Bulk nach Konditionierung bei 25 °C und 30% relativer Luftfeuchtigkeit, aufgrund der speziellen Teilchengröße aktive Zentren mit erhöhter Ladungsdichte bildet, welche Zentren erhöhter Ladungsdichte bei dem darüberstreifenden Aerosol die an der Oberfläche des Aerosol vorhandene elektrische Ladung verschieben und damit Ionen im Sinne von elektrisch geladenen Teilchen erzeugen können. Das spezielle Masseverhältnis zwischen anorganischem Kolloid und Bindemittel in der Beschichtung stellt dabei sicher, dass die fertige getrocknete Beschichtung Poren bzw. Kapillaren aufweist, welche eine Speichermöglichkeit für Wasser vorsehen. Nachdem die Generierung von Ionen an eine ausreichende Luftfeuchtigkeit gebunden ist, wird durch das spezielle Masseverhältnis zwischen anorganischem Kolloid und Bindemittel sichergestellt, dass die getrocknete Beschichtung diese Luftfeuchtigkeit selbst nachliefern kann, indem gespeichertes Wasser durch beispielsweise kapillare Verdunstung freigesetzt wird. Dazu nötiges Wasser kann der getrockneten Beschichtung, wenn die relative Luftfeuchte nicht ausreichen sollte, durch einfaches Aufsprühen, beispielsweise mittels eines haushaltsüblichen Zerstäubers, von Zeit zu Zeit nachgeliefert werden. Die erfindungsgemäß eingesetzten polydisperse anorganische Kolloide sind ausgewählt aus der Gruppe der ungebrannten Schichtsilikate, umfassend Kaolinit, Serpentin, Montmorillonit und Glimmer, wie beispielsweise Muskovit, Celadonit, Annit, Phlogopit, Illit, Glaukonit, Biotit und Lepidolith, sowie Kombinationen hiervon. Schichtsilicate - auch Blatt- oder Phyllosilicate genannt - sind eine Untergruppe der Silicat-Minerale und zeigen mit ihrer zweidimensionalen Vernetzung der SiO₄ -Tetraeder eine einzige ausgezeichnete Spaltrichtung. Die SiO₄-Tetraeder, welche die strukturelle Grundeinheit aller Silicate bilden, sind in den Phyllosilicaten in Schichten mit der Zusammensetzung Si₂O₅ miteinander vernetzt. Diese Tetraederschichten wechsellagern mit Oktaederschichten, in denen ein Kation, vor allem Aluminium und Magnesium oktaedrisch von Hydroxid bzw. Sauerstoff umgeben ist. Dabei kann sowohl eine Si₂O₅-Tetraederschicht mit einer Oktaederschicht (Zweischicht-Phyllosilicate) als auch zwei Tetraederschichten mit einer Oktaederschicht (Dreischicht-Phyllosilicate) verbunden sein. Zu den Zweischicht-Mineralen zählen vor allem Kaolinit und Serpentin, zu den Dreischicht-Mineralen vor allem Montmorillonit, aber auch die Glimmer. Strukturell zeichnen sich die Glimmer durch Schichten von TO4-Tetraedern und MO6-Oktaedern aus. Eine Oktaederschicht wird hierbei von 2 Tetraederschichten eingeschlossen. Untereinander sind diese T-O-T-Sandwiches nur sehr schwach über große niedrig geladene Zwischenschichtkationen verbunden. Auch für die Minerale der Glimmergruppe ist die perfekte Spaltbarkeit parallel zu diesen Schichtpaketen charakteristisch.

Vorzugsweise enthält die Beschichtung zusätzlich inerte Füllstoffe in einem Masseverhältnis zwischen polydispersem anorganischen Kolloid und Füllstoff größer als 1 zu 3, vorzugsweise größer als 1 zu 2 und besonders bevorzugt größer als 4 zu 1, wobei gemäß einer bevorzugten Ausführungsform vorgesehen ist, dass die inerten Füllstoffe ausgewählt sind aus der Gruppe umfassend Citrin, Rosenquarz, Turmalin, Aventurin und Sodalith sowie Kombinationen hiervon. Das spezielle Masseverhältnis zwischen polydispersem anorganischen Kolloid und Füllstoff ergab sich aus den durchgeführten Versuchen, wobei bei einem Masseverhältnis zwischen polydispersem anorganischen Kolloid und Füllstoff kleiner als 1 zu 3, also mehr als dreimal soviel Füllstoff als Kolloid, eine messbare Abnahme an generierten Ionen zu verzeichnen war. Wiederum ohne an eine bestimmte Theorie gebunden zu sein wird vermutet, dass bei einer vergrößerten Menge an Füllstoff sich an der Oberfläche der trockenen Beschichtung nicht genügend aktive Zentren mit erhöhter Ladungsdichte befinden und dadurch die Generierung von Ionen abnimmt. Als Füllstoffe können dabei beispielsweise Quarz, Kalkstein oder Marmor verwendet werden, vorzugsweise werden als inerte Füllstoffe Halbedelsteine verwendet. Von solchen Kristallen ist bekannt, dass sie durch Schläge, Druck oder bei einer Temperaturveränderung piezo- bzw. pyroelektrische Effekte aufweisen, welche zusätzlich aktive Zentren an der Oberfläche der getrockneten Beschichtung vorsehen können.

Gemäß einer bevorzugten Ausführungsformen ist vorgesehen, dass die inerten Füllstoffe eine Teilchengröße d-50% von zwischen 1 und 100 µm, vorzugsweise von zwischen 1 und 50 µm, noch bevorzugter zwischen 1 und 30 µm aufweisen. Durch eine solche besonders bevorzugte Teilchengröße, welche in der gleichen Größenordnung liegt wie jene für das anorganische Kolloid, wird sichergestellt, dass in der fertig getrockneten Beschichtung alle vorhandenen Teilchen eine ähnliche Größe aufweisen, wodurch die im Zusammenhang mit dem speziellen Masseverhältnis zwischen anorganischem Kolloid und Bindemittel angesprochene Speichermöglichkeit für Wasser in der fertigen Beschichtung weiter verbessert wird.

Weiters ist es günstig, wenn das Bindemittel ausgewählt ist aus der Gruppe umfassend Kunstharzdispersionen, Wasserglas, Kalkhydrat sowie Kombinationen hiervon. Derartige Bindemittel haben sich dahingehend bewährt, dass sie bei dem erfindungsgemäß vorgesehenen speziellen Masseverhältnis zwischen anorganischem Kolloid und Bindemittel die Bildung von Poren bzw. Kapillaren besonders begünstigen und so weiter dazu beitragen, die nötige Speichermöglichkeit für Wasser vorzusehen.

Gemäß einer weiteren Ausführungsform der vorliegenden Erfindung wird eine Innenraumbeschichtung, hergestellt unter Verwendung der oben erwähnten verwendungsfertigen Innenraumbeschichtungszusammensetzung vorgesehen, welche im getrockneten Zustand eine Schichtdicke von durchschnittlich zwischen 0,15 und 1,5 mm aufweist, entsprechend einem Nassauftrag von zwischen 0,5 und 2,5 kg/m². Eine derartige Schichtdicke bzw. ein derartiger Nassauftrag stellt in der fertigen Beschichtung eine ausreichende Speichermöglichkeit für Wasser und damit eine lang anhaltende Generierung von Ionen sicher.

Gemäß noch einer weiteren Ausführungsform der vorliegenden Erfindung wird eine tafelförmige Innenraumbeschichtung umfassend ein polydisperses anorganisches Kolloid, ein Bindemittel und gegebenenfalls herkömmliche Hilfs- und Zusatzstoffe vorgesehen, wobei das anorganische Kolloid eine Teilchengröße d-50% von zwischen 1 und 30 µm, vorzugsweise zwischen 5 und 15 µm, und eine relative Permittivität von 5 bis 30 im Frequenzbereich von 1 MHz - 200 MHz aufweist und das Masseverhältnis zwischen anorganischem Kolloid und Bindemittel als Trockensubstanz größer als 2,5 zu 1 ist. Es sei ausdrücklich angemerkt, dass die Zusammensetzung dieser tafelförmigen Innenraumbeschichtung der Zusammensetzung der verwendungsfertigen Innenraumbeschichtung bzw. der Innenraumbeschichtung wie bisher beschrieben entspricht, mit anderen Worten bedeutet dies, dass eine Wand nicht unbedingt mit der verwendungsfertigen Innenraumbeschichtung im Sinne eines Auftrags durch Spritzen, Streichen, Walzen, Cremen oder ähnlichen Aufbringungsarten behandelt werden muss, um einen Ionen generierenden Effekt aufzuweisen, die erfindungsgemäße Zusammensetzung kann anstelle eines direkten Auftrags auch zu fertigen tafelförmigen Elementen geformt werden, welche Elemente dann auf der Wand angebracht werden. Derartige Elemente können dabei an ihrer Oberfläche dekorative Elemente dreidimensionaler Art in Form einer Reliefstruktur aufweisen, wodurch beispielsweise zusätzliche Speichermöglichkeit für Wasser vorgesehen werden kann. Die Anbringung der tafelförmigen Elemente an der Wand erfolgt dabei nach herkömmlichen Verfahren; selbstverständlich können derartige Elemente - wie natürlich auch die erfindungsgemäße gebrauchsfertige Innenraumbeschichtung selbst - nicht nur an der Wand sondern auch an der Decke oder anstelle des Fußbodens eines Raumes angebracht werden.

Hinsichtlich der Auswahl von Füllstoffen, deren Teilchengröße, Bindemittel und anorganischem Kolloid bzw. der bevorzugten Merkmale und Vorteile derselben entspricht die tafelförmige Innenraumbeschichtung der verwendungsfertigen Innenraumbeschichtung bzw. der getrockneten fertigen Innenraumbeschichtung. Es wird auf die obenstehenden Ausführungen zu der verwendungsfertigen Innenraumbeschichtung verwiesen.

Abgesehen von einem direkten Auftrag und der Formung zu fertigen tafelförmigen Elementen kann die erfindungsgemäße Zusammensetzung auch als Innen- oder Außenbeschichtung geeigneter Objekte, beispielsweise Rohre, Füllkörper, Gitter oder dergleichen, verwendet werden. Bei einer Zwangsführung von beispielsweise umgewälzter Raumluft durch oder über derart beschichtete Rohre bzw. über derart beschichtete Füllkörper oder Gitter kann, ein Vorsehen ausreichender Luftfeuchtigkeit vorausgesetzt, der erfindungsgemäße Effekt ebenfalls erzielt werden. Eine derartige Verwendung der erfindungsgemäßen Zusammensetzung bietet sich beispielsweise für den Fahrzeugbau (KFZ, Flugzeug, Schiff, Zug et cetera) oder bei einer zentralen Klimatisierung von Gebäuden an, wobei dadurch auch ohne direkte Beschichtung der Wand des jeweiligen Raumes in der Raumluft eine erhöhte Ionenkonzentration vorgesehen werden kann.

Die vorliegende Erfindung wird nun anhand einiger Beispiele, auf die sie jedoch nicht beschränkt ist, näher beschrieben. Falls nicht anders angegeben, wurde als Bindemittel eine wässrige Acryldispersion mit 50 %-Masse Festkörper, unterschiedliche Mengen ungebranntes Kaolin mit einer Teilchengröße d-50 % von 3 bis 10 µm sowie Füllstoffe in unterschiedlichen Mengen mit einer Teilchengröße d-50 % von 15 bis 30 µm verwendet. Der Nassauftrag betrug dabei 0,8 bis 1,5 kg/m², entsprechend einer Schichtdicke der fertigen Beschichtung von durchschnittlich 300 bis 600 µm. In den beiliegenden Zeichnungen wird die unter Verwendung der erfindungsgemäßen verwendungsfertigen Innenraumbeschichtung erhaltene fertige trockene Beschichtung auch als "Ionit-Creme" bezeichnet. Bei der als Vergleich herangezogenen Innendispersionsfarbe handelte es sich um das Produkt Murexin Profiweiß, Murexin GmbH, AT.

Die angegebene gemessene Ionenkonzentration wurde mit Hilfe eines lonometers IM806, Firma Holbach Umweltanalytik GmbH ermittelt.

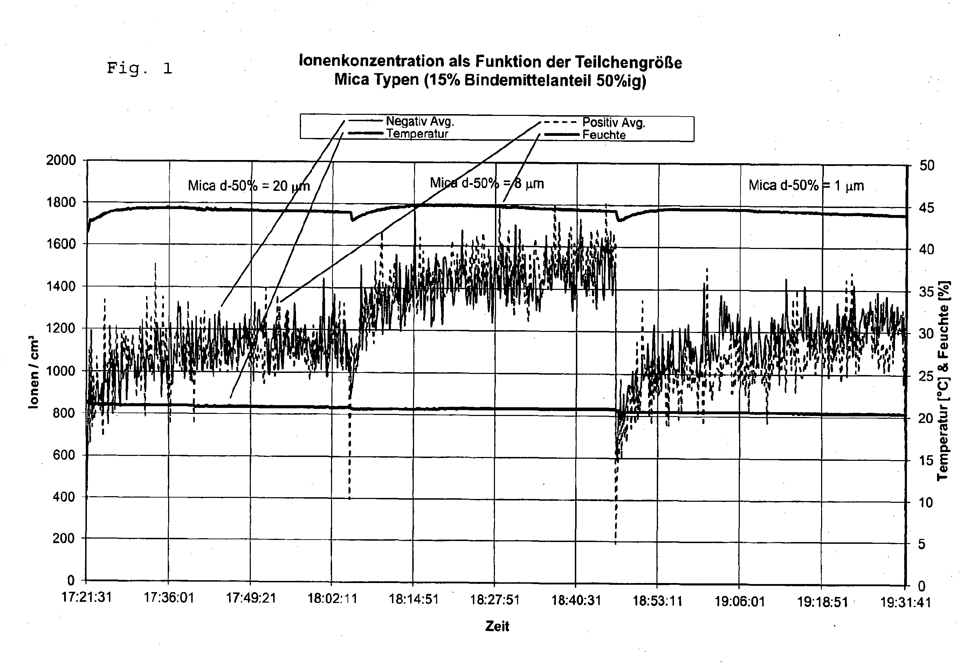

Fig. 1 zeigt die ermittelte Ionenkonzentration in einem Testraum, 1 m³ Rauminhalt mit beschichteten Fermacellplatten, ausgemalt mit der erfindungsgemäßen verwendungsfertigen Innenraumbeschichtung, wobei diese Mica in verschiedenen Teilchengrößen in einer Menge von 50 %-Masse und als Bindemittel 10%-Masse einer wässrigen Acryldispersion mit 50 %-Masse Festkörper, sowie 35 %-Masse Wasser und Rest übliche Zusatzstoffe aufwies. Wie aus Fig. 1 ersichtlich betrug die Temperatur bei der Messung 20 °C, die relative Luftfeuchtigkeit etwa 45 %. Die Ergebnisse zeigen anhand der Messungen bei Teilchengrößen von d-50 % von 1 µm, 8 µm und 20 µm deutlich, dass in dem Testraum bei Verwendung einer erfindungsgemäßen Innenraumbeschichtung mit einem anorganischen Kolloid mit einer Teilchengröße d-50 % von zwischen 1 und 30 µm eine signifikante Erhöhung der Ionenkonzentration nachgewiesen werden konnte.

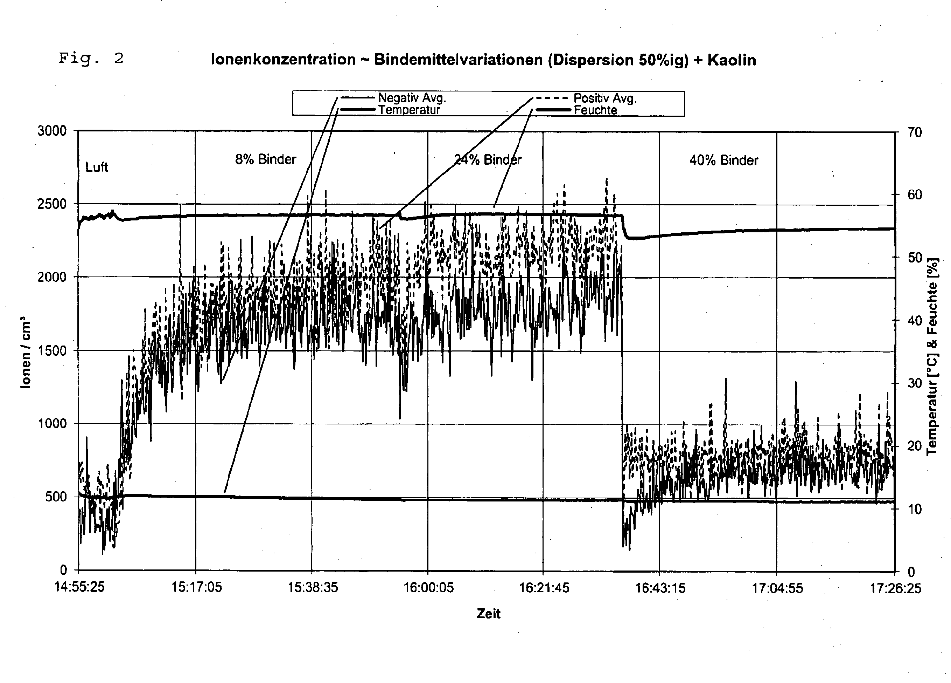

Fig. 2 zeigt die ermittelte Ionenkonzentration im selben Testraum, ausgemalt mit der erfindungsgemäßen verwendungsfertigen Innenraumbeschichtung, wobei die Innenraumbeschichtung 50 %-Masse ungebrannten Kaolin, verschiedene Mengen an Bindemittel (jeweils 50 %-Masse wässrige Acryldispersion), Rest Wasser und übliche Zusatzstoffe wie in Fig. 1 angegeben, aufwies. Die Temperatur bei der Messung betrug knapp über 10 °C, die relative Luftfeuchtigkeit etwa 55 %. Aus Fig. 2 ist ersichtlich, dass im Testraum ohne erfindungsgemäßen Innenraumbeschichtung eine Ionenkonzentration von im Mittelwert etwa 500 Ionen pro Kubikzentimeter gemessen werden konnte, wobei die Ionenkonzentration nach Aufbringung und Trocknen der erfindungsgemäßen Innenraumbeschichtung plötzlich auf im Mittelwert etwa 1750 Ionen pro Kubikzentimeter anstieg. Eine erhöhte Menge an Bindemittel von 24 %-Masse ergab überraschenderweise eine im Mittelwert gleichbleibende durchschnittliche Konzentration von negativen Ionen, während der Mittelwert der durchschnittlichen Konzentration an positiven Ionen auf etwa 2250 pro Kubikzentimeter anstieg. Eine weitere Erhöhung der Menge an Bindemittel auf 40 %-Masse ergab ein Absinken der Ionenkonzentration auf im Mittelwert etwa 750, was jedoch noch immer deutlich über den im Testraum ohne erfindungsgemäßer Innenraumbeschichtung gemessenen Werten lag.

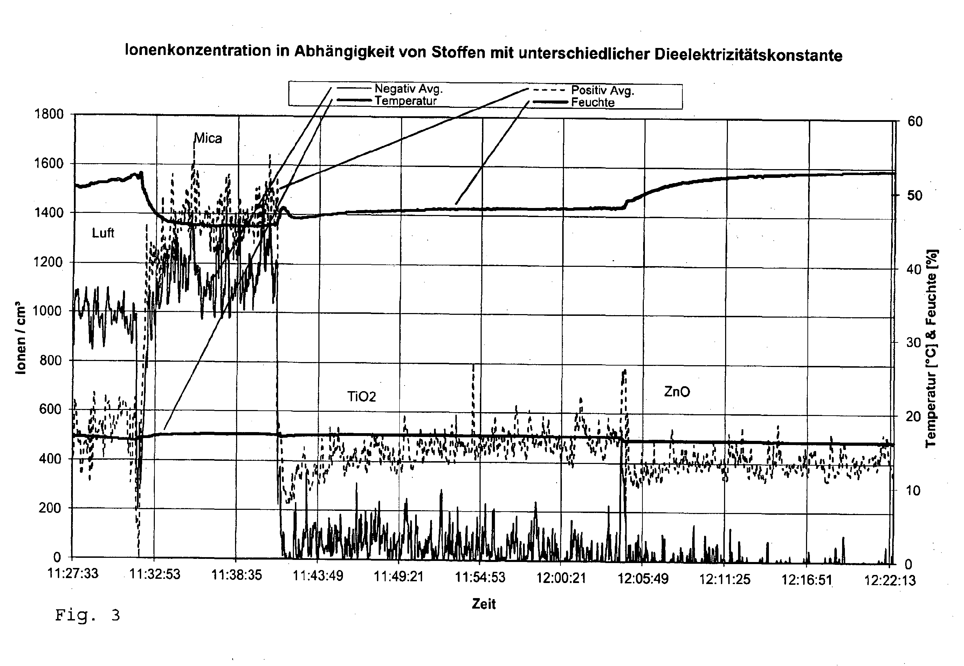

Fig. 3 zeigt die ermittelte Ionenkonzentration im Testraum, ausgemalt mit der erfindungsgemäßen verwendungsfertigen Innenraumbeschichtung, wobei zum Vergleich ein anorganisches Kolloid (Teilchengröße 7 µm), Titandioxid (Teilchengröße 1 µm) bzw. Zinkoxid (Teilchengröße 2 µm), jeweils bei sonst gleich bleibender Zusammensetzung von 50 %-Masse Kolloid bzw. Titandioxid und Zinkoxid, 10 %-Masse Bindemittel (50 %-Masse wässrige Acryldispersion) und 35 %-Masse Wasser, Rest übliche Zusatzstoffe wie in Fig. 1 angegeben, verwendet wurde. Die Temperatur bei der Messung betrug etwa 17 °C, die relative Luftfeuchtigkeit etwa 50 %. Aus den Ergebnissen ist deutlich erkennbar, dass nur bei Verwendung eines anorganischen Kolloids, hier Mica, der überraschende Effekt einer Erhöhung der Ionenkonzentration auftrat, bei Verwendung von Titandioxid bzw. Zinkoxid in einer ansonsten unveränderten Innenraumbeschichtung sank die Ionenkonzentration - zumindest hinsichtlich der negativen Ionen - sogar deutlich unter den Ausgangswert ohne Beschichtung ab.

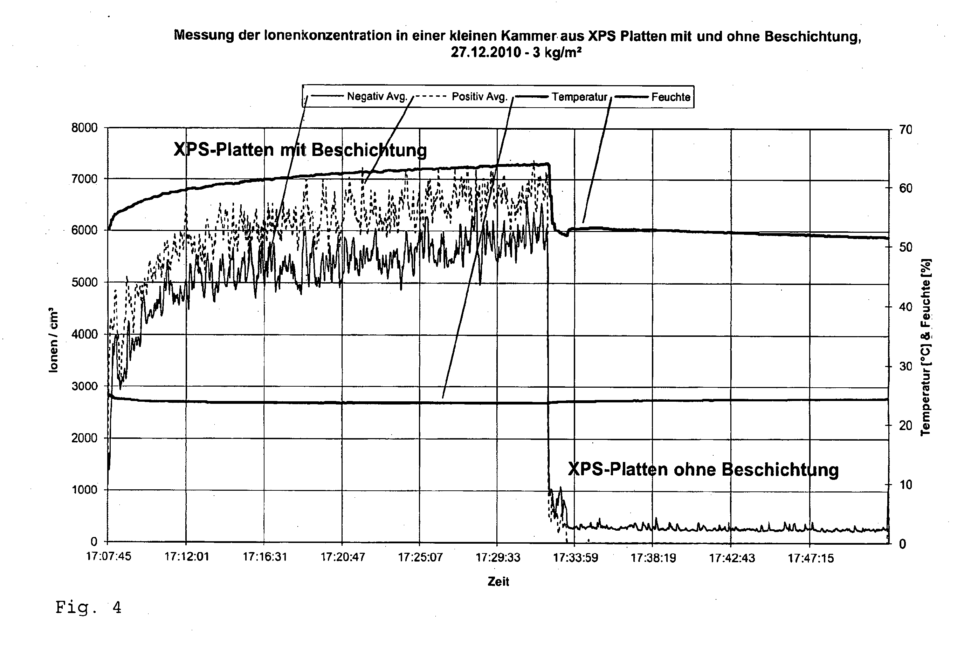

Fig. 4 zeigt die Messung der Ionenkonzentration in einer kleinen Kammer aus XPS-Platten (0,5 m³, direkt auf XPS-beschichtet, 3 kg/m² Auftragsmenge) mit und ohne Beschichtung, die Temperatur bei der Messung betrug etwa 23 °C. Es ist klar ersichtlich, dass die Luftfeuchtigkeit in der kleinen Kammer mit der Beschichtung zusammenhängt; bei Beschichtung mit der erfindungsgemäßen Zusammensetzung betrug die relative Feuchtigkeit etwa 60 %, während die relative Feuchtigkeit in der Kammer ohne Beschichtung nur etwa 50 % betrug. Aus den Messungen ist auch ersichtlich, dass nur bei Verwendung der erfindungsgemäßen Beschichtung eine Ionenkonzentration von deutlich über 5000 Ionen pro Kubikzentimeter, für positive Ionen sogar etwa 6500 Ionen pro Kubikzentimeter, gemessen werden konnte.

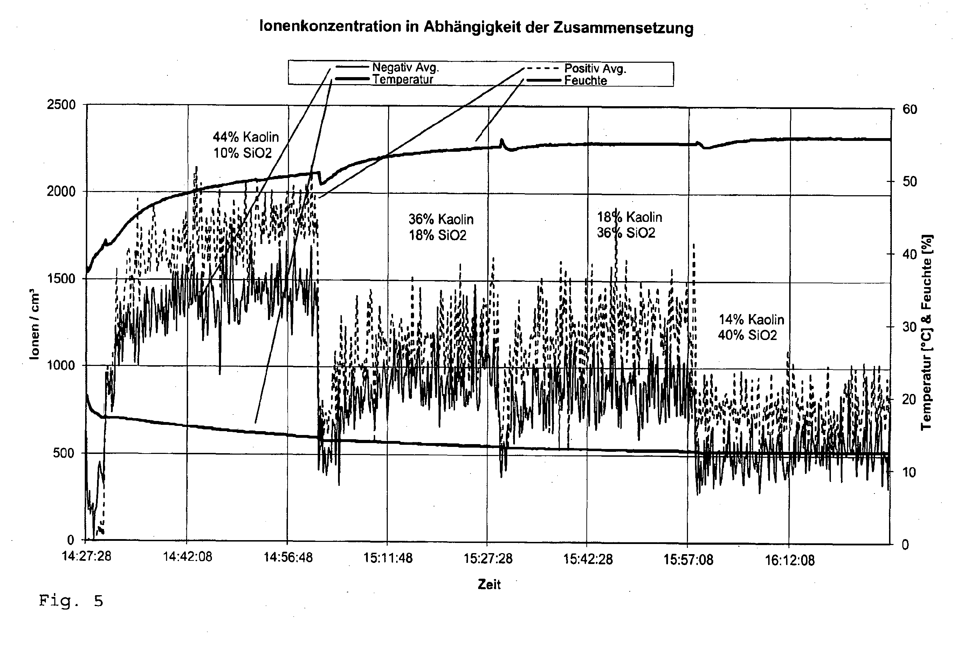

Fig. 5 zeigt die ermittelte Ionenkonzentration im Testraum, ausgemalt mit der erfindungsgemäßen verwendungsfertigen Innenraumbeschichtung, wobei die Innenraumbeschichtung ungebrannten Kaolin in verschiedenen Mengen, 10 %-Masse Bindemittel (50 %-Masse wässrige Acryldispersion) verschiedene Mengen an inerten Füllstoffen, Rest Wasser und übliche Zusatzstoffe wie in Fig. 1 angegeben, aufwies. Die Temperatur bei der Messung betrug knapp über 12 °C, die relative Luftfeuchtigkeit zwischen 50 und 55 %. Aus
Fig. 5 ist ebenfalls ersichtlich, dass im Testraum ohne erfindungsgemäßen Innenraumbeschichtung eine Ionenkonzentration von im Mittelwert etwa 0 bis 250 Ionen pro Kubikzentimeter gemessen werden konnte, wobei die Ionenkonzentration nach Aufbringung und Trocknen der erfindungsgemäßen Innenraumbeschichtung mit 44 %-Masse Kaolin und 10 %-Masse SiO₂ plötzlich auf im Mittelwert etwa 1750 Ionen pro Kubikzentimeter für negative Ionen und 1750 Ionen pro Kubikzentimeter für positive Ionen anstieg. Eine erhöhte Menge an Füllstoffen von 18 bis 40 %-Masse auf Kosten der Menge an Kaolin ergab eine im Mittelwert absinkende durchschnittliche Konzentration von negativen Ionen auf etwa 800-500 Ionen pro Kubikzentimeter und von positiven Ionen auf etwa 1250-750 Ionen pro Kubikzentimeter, was jedoch noch immer deutlich über den im Testraum ohne erfindungsgemäßer Innenraumbeschichtung gemessenen Werten lag.

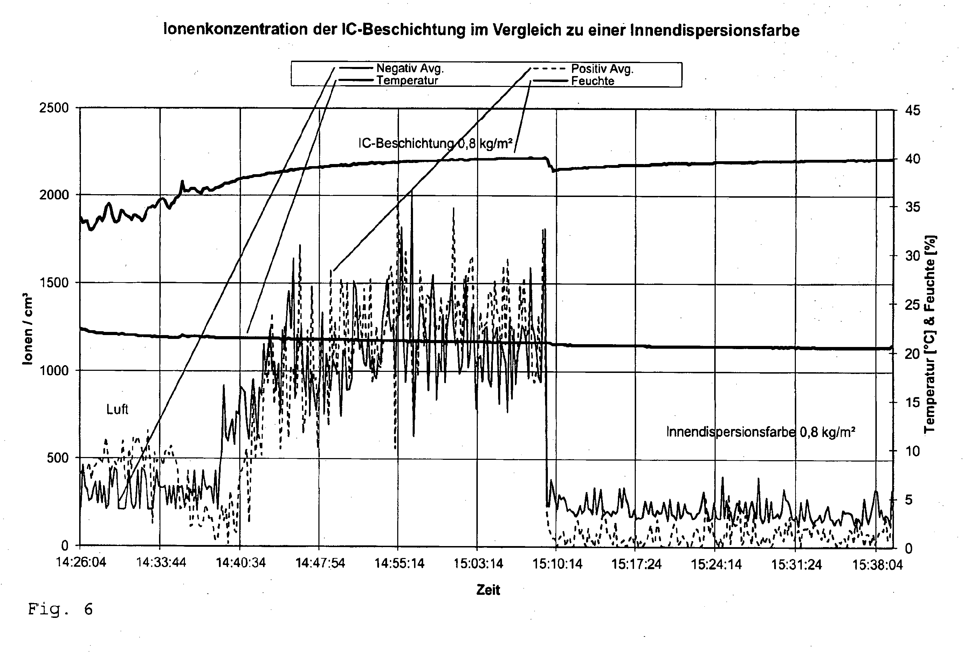

Fig. 6 zeigt die ermittelte Ionenkonzentration im Testraum, ausgemalt mit der erfindungsgemäßen verwendungsfertigen Innenraumbeschichtung, im Vergleich mit der ermittelten Ionenkonzentration im selben Testraum, ausgemalt mit einer handelsüblichen Innendispersionsfarbe. Die Temperatur bei der Messung betrug etwa 20 °C, die relative Luftfeuchtigkeit zwischen 35 und 40 %. Auch aus Fig. 6 ist ersichtlich, dass im Testraum ohne erfindungsgemäßer Innenraumbeschichtung eine Ionenkonzentration von im Mittelwert etwa 250 Ionen pro Kubikzentimeter für negative Ionen und etwa 500 Ionen pro Kubikzentimeter für positive Ionen gemessen wurde, wobei die Ionenkonzentration nach Aufbringung der erfindungsgemäßen Innenraumbeschichtung in einem Nassauftrag von 0,8 kg/m² und Trocknen derselben plötzlich auf etwa 1250 Ionen pro Kubikzentimeter anstieg. Beim selben Testraum, ausgemalt mit einer handelsüblichen Innendispersionsfarbe (Murexin Profiweiß) in einem Nassauftrag von 0,8 kg/m², konnte lediglich eine Ionenkonzentration von im Mittelwert etwa 250 Ionen pro Kubikzentimeter für negative Ionen und etwa 0 bis 100 Ionen pro Kubikzentimeter für positive Ionen gemessen werden.

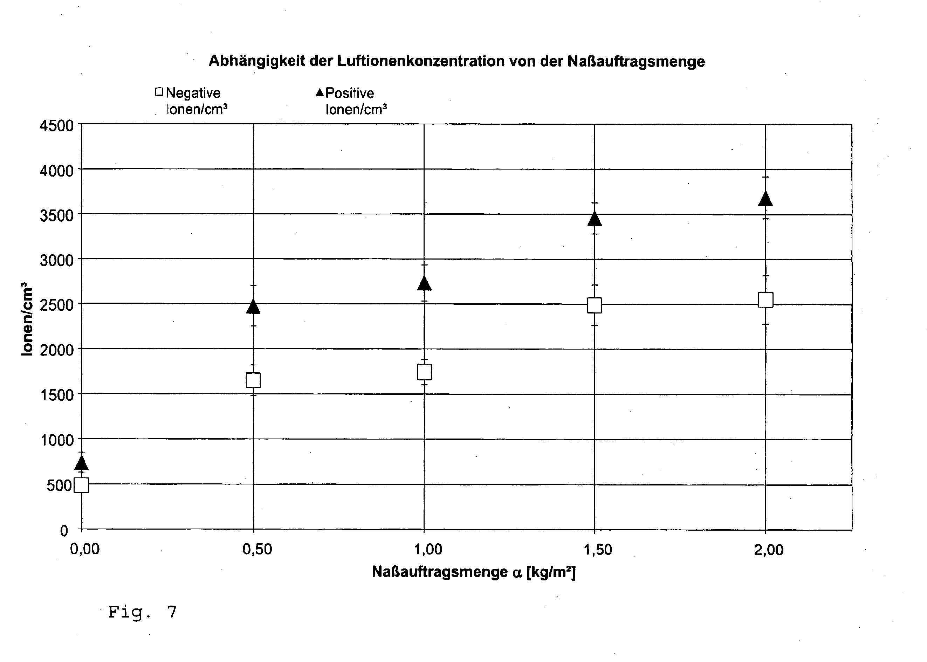

Fig. 7 zeigt die ermittelte Ionenkonzentration im Testraum, ausgemalt mit der erfindungsgemäßen verwendungsfertigen Innenraumbeschichtung in unterschiedlichen Nassauftragsmengen. Die Temperatur bei der Messung betrug etwa 21 °C, die relative Luftfeuchtigkeit etwa 49 %. Wie aus Fig. 7 ersichtlich betrug die Ionenkonzentration im Testraum vor Aufbringen der erfindungsgemäßen Innenraumbeschichtung im Mittelwert etwa 500 Ionen pro Kubikzentimeter für negative Ionen und etwa 700 Ionen pro Kubikzentimeter für positive Ionen, nach Aufbringen der erfindungsgemäßen Innenraumbeschichtung in einer Nassauftragsmenge von lediglich 0,5 kg/m² und Trocknen derselben stieg die Ionenkonzentration auf etwa 1700 Ionen pro Kubikzentimeter für negative Ionen und knapp 2500 Ionen pro Kubikzentimeter für positive Ionen, die Messergebnisse für die Nassauftragsmengen von 1,0, 1,5 bzw. 2,0 kg/m² sind aus Fig. 7 ersichtlich.

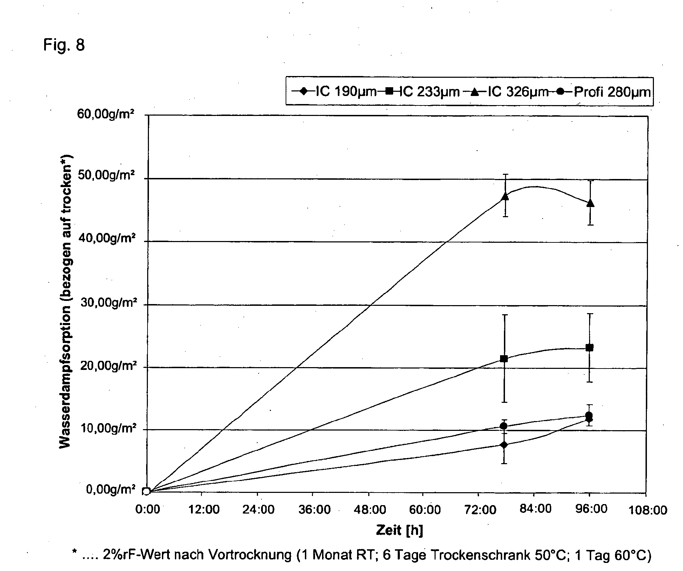

Fig. 8 zeigt den zeitlichen Verlauf der Wasserdampfresorption als Funktion der Schichtstärke in einer Glaskammer mit einer relativen Luftfeuchte von 56 %. Die Temperatur bei der Messung betrug etwa 25 °C, als Träger wurde eine Aluminiumfolie in einer Stärke von 15 µm verwendet. Zum Einsatz kamen erfindungsgemäße Innenraumbeschichtungen in einer Dicke von 190 µm, 233 µm und 326 µm; als Vergleich wurde eine handelsübliche Dispersionsfarbe (Murexin Profiweiß) in eine Schichtdicke von 280 µm gemessen. Wie aus Fig. 8 ersichtlich weist eine erfindungsgemäße Innenraumbeschichtung in einer Schichtdicke von lediglich 190 µm nach 96 h eine identische Wasserdampfabsorption auf wie die handelsübliche Dispersionsfarbe in einer um 50 % größeren Schichtdicke von 280 µm, bei ungefähr vergleichbaren Schichtdicken (233 µm zu 280 µm) weist die erfindungsgemäße Innenraumbeschichtung mehr als doppelt so große Wasserdampfabsorption auf wie die handelsübliche Dispersionsfarbe.

Der Einfluss der erfindungsgemäßen Innenraumbeschichtung auf die Anzahl der Ionen in der Raumluft und auf die Anzahl von Partikeln wurde auch im direkten Vergleich mit einer handelsüblichen mineralischen Innenfarbe (Murexin Profiweiß) bestimmt. Für die Untersuchungen wurden aus Gipskartonplatten zwei Prüfräume mit gleichen Abmessungen gebaut, die Innenseiten der Prüfräume wurden mit der handelsüblichen mineralischen Innenfarbe (Murexin Profiweiß) einerseits und mit der erfindungsgemäßen Innenraumbeschichtung andererseits ausgemalt. Die Untersuchungen wurden zeitgleich in beiden Räumen durchgeführt.

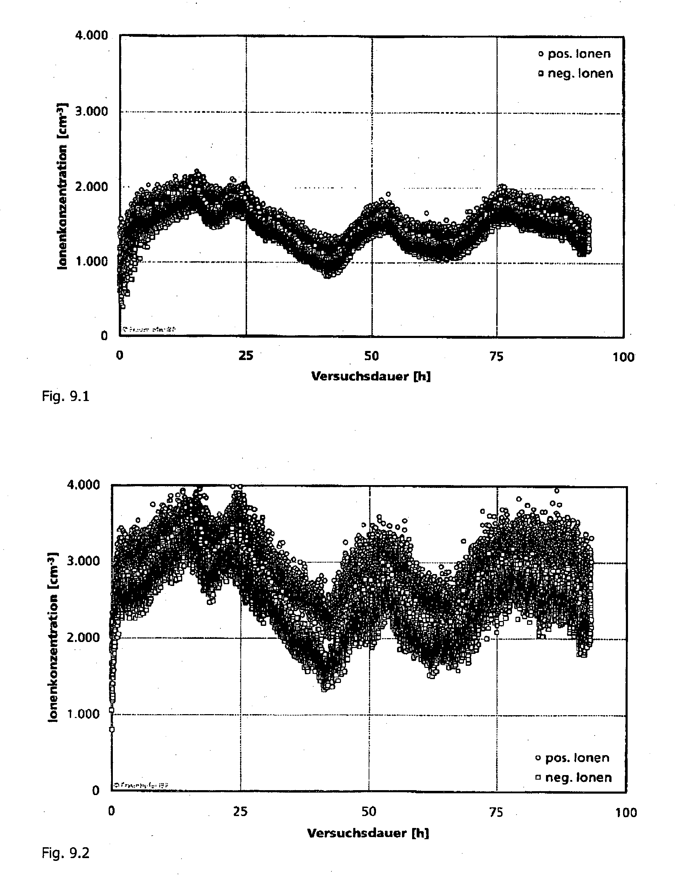

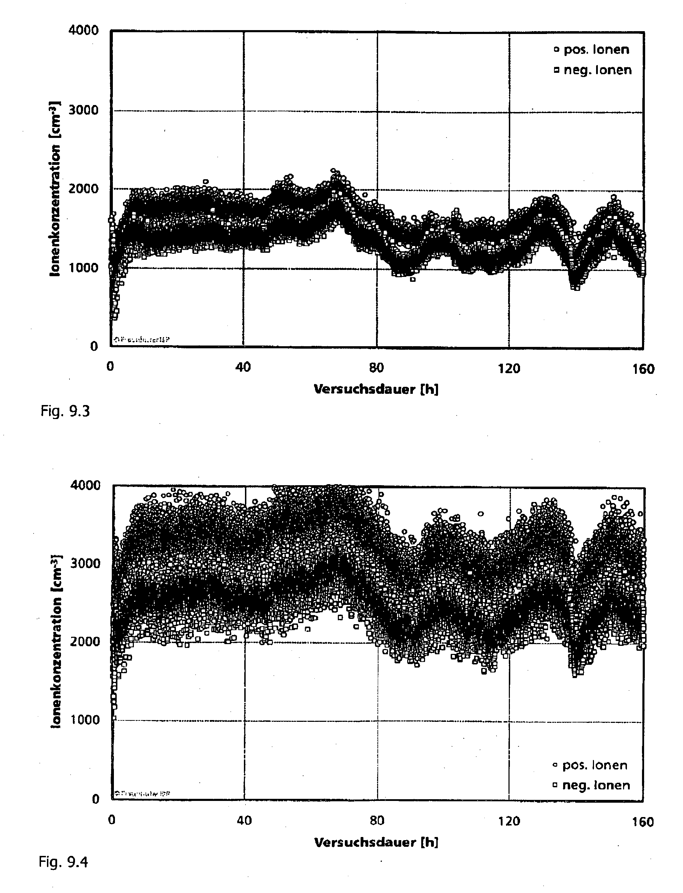

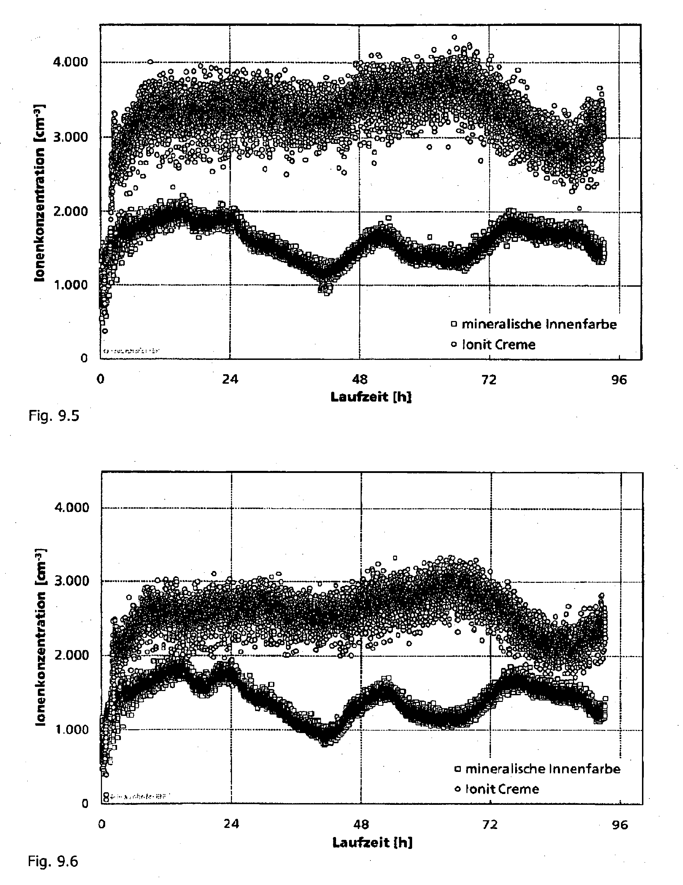

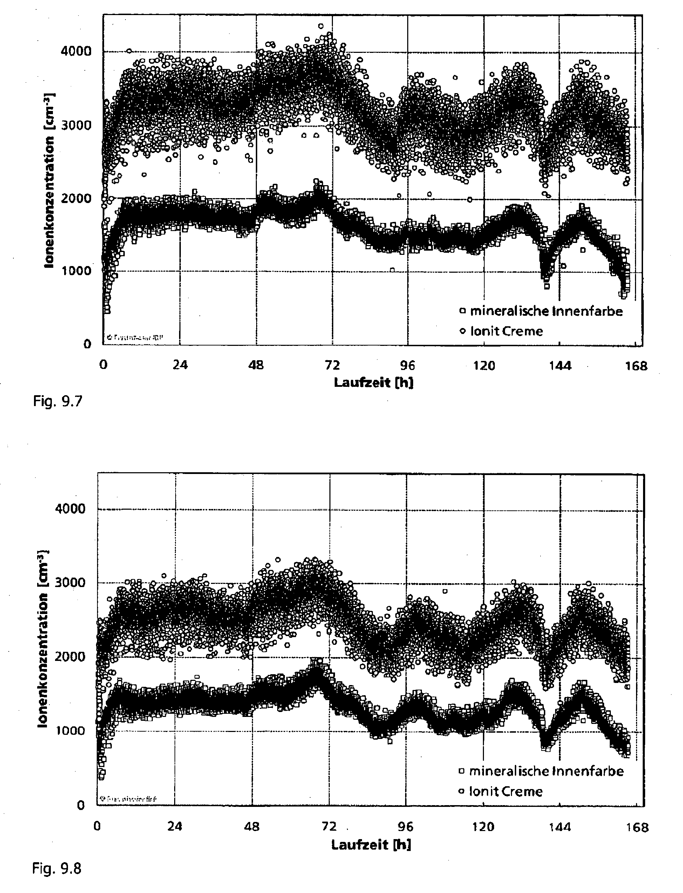

Mittels eines lonometers (IM 806, Holbach GmbH, Wadern, DE) wurde der zeitliche Verlauf der Konzentrationen an positiven und negativen Ionen in der Raumluft in beiden Räumen erfasst. Es wurden zwei Versuchsreihen durchgeführt, wobei zwischen Versuchsreihe 1 und Versuchsreihe 2 die Messgeräte in den Prüfräumen getauscht wurden. Die Innentemperatur im Prüfraum 1, beschichtet mit der handelsüblichen mineralischen Innenfarbe, betrug 23,8 °C und die relative Luftfeuchtigkeit 39,6 %, während die Innentemperatur im Prüfraum 2, beschichtet mit der erfindungsgemäßen Innenraumbeschichtung 23,1 °C und die relative Luftfeuchtigkeit 41,4 % betrug. Die Durchschnittsergebnisse der Messungen werden in der nachfolgenden Tabelle 1 angeführt, die einzelnen Messwerte werden in den Figuren 9.1 bis 9.8 dargestellt.

| | | Prüfraum 1, beschichtet mit der handelsüblichen mineralischen Innenfarbe | | Prüfraum 2, beschichtet mit der erf.gem. Innenraumbeschichtung | |
|---|---|---|---|---|---|
| | | pos. Ionen | neg. Ionen | pos. Ionen | neg. Ionen |
| Minimale Ionenkonzentration (cm^{- 3}) | Versuchsreihe 1 | 482 | 392 | 1830 | 797 |
| | Versuchsreihe 2 | 454 | 365 | 1709 | 1029 |
| Maximale Ionenkonzentration (cm^{- 3}) | Versuchsreihe 1 | 2219 | 2068 | 4082 | 3740 |
| | Versuchsreihe 2 | 2249 | 1972 | 4344 | 3327 |
| Durchschn. Ionenkonzentration (cm^{- 3}) | Versuchsreihe 1 | 1596 | 1404 | 2974 | 2423 |
| | Versuchsreihe 2 | 1620 | 1318 | 3217 | 2466 |

Wie ersichtlich unterscheiden sich die Konzentrationen an positiven und negativen Ionen in der Raumluft der beiden Prüfräume um mindestens den Faktor zwei. Sowohl die Konzentration an positiven als auch an negative Ionen in der Raumluft waren im Prüfraum mit der erfindungsgemäßen Innenraumbeschichtung um mindestens den Faktor zwei größer als im Prüfraum mit der handelsüblichen mineralischen Innenfarbe.

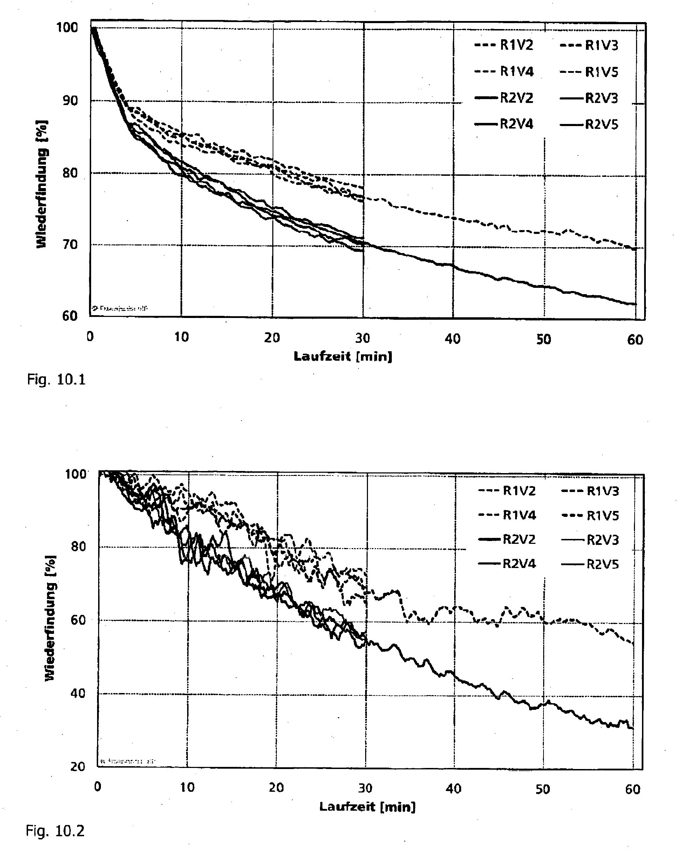

Der Einfluss der erfindungsgemäßen Innenraumbeschichtung auf das Verhalten von Partikeln in der Raumluft wurde ebenfalls im direkten Vergleich mit einer handelsüblichen mineralischen Innenfarbe bestimmt. Für diese Untersuchungen wurden ebenfalls die oben erwähnten zwei Prüfräume aus Gipskartonplatten verwendet, die Innenseiten der Prüfräume wurden mit der handelsüblichen mineralischen Innenfarbe einerseits und mit der erfindungsgemäßen Innenraumbeschichtung andererseits ausgemalt. Die Untersuchungen wurden zeitgleich in beiden Räumen durchgeführt. Die Innentemperatur im Prüfraum 1, beschichtet mit der handelsüblichen mineralischen Innenfarbe, betrug zwischen 19,3 und 20,3 °C und die relative Luftfeuchtigkeit zwischen 33,7 und 34,5 %, während die Innentemperatur im Prüfraum 2, beschichtet mit der erfindungsgemäßen Innenraumbeschichtung, zwischen 19,4 und 20,4 °C und die relative Luftfeuchtigkeit zwischen 32,1 und 33,5 % betrug. In die Versuchsräume wurden mit Hilfe eines Staubgenerators (ASHRAE Dust Dispenser SAG 440, Topas GmbH, Dresden, DE) Teststaub nach ISO 12103-1 A2 mit einer Partikelgröße von 0,5-15 µm eingeblasen. Die Wiederfindung des eingeblasenen Staubs wurde mit zwei baugleichen Aerosolspektrometern (Portable Dust Analyzer 1105, Grimm Aerosol Technik GmbH & Co. KG, Ainring, DE) bestimmt. Wie aus den Figs. 10.1 und 10.2 ersichtlich liegen die prozentuellen Wiederfindungen für die R1V-Werte (gemessen in Prüfraum 1, beschichtet mit der handelsüblichen mineralischen Innenfarbe) deutlich über jenen für die R2V-Werte (gemessen in Prüfraum 2, beschichtet mit der erfindungsgemäßen Innenraumbeschichtung).

## Patentansprüche

1. Verwendungsfertige Innenraumbeschichtungszusammensetzung umfassend ein anorganisches Kolloid, ein Bindemittel, Wasser als Lösungs- bzw. Dispersionsmittel und gegebenenfalls herkömmliche Hilfs- und Zusatzstoffe, **dadurch gekennzeichnet, dass** das anorganische Kolloid ausgewählt ist aus der Gruppe der ungebrannten Schichtsilikate, umfassend Kaolinit, Serpentin, Montmorillonit und Glimmer, wie beispielsweise Muskovit, Celadonit, Annit, Phlogopit, Illit, Glaukonit, Biotit und Lepidolith, sowie Kombinationen hiervon und eine Teilchengröße d-50% von zwischen 1 und 30 µm, vorzugsweise zwischen 5 und 15 µm, und eine relativen Permittivität von 5 bis 30 im Frequenzbereich von 1 MHz - 200 MHz, gemessen im Bulk nach Konditionierung bei 25 °C und 30% relativer Luftfeuchtigkeit, aufweist und das Masseverhältnis zwischen anorganischem Kolloid und Bindemittel als Trockensubstanz größer als 2,5 zu 1 ist.

2. Verwendungsfertige Innenraumbeschichtungszusammensetzung nach Anspruch 1, **dadurch gekennzeichnet, dass** die Beschichtung zusätzlich inerte Füllstoffe in einem Masseverhältnis zwischen anorganischem Kolloid und Füllstoff größer als 1 zu 3, vorzugsweise größer als 1 zu 2 und besonders bevorzugt größer als 4 zu 1 enthält.

3. Verwendungsfertige Innenraumbeschichtungszusammensetzung nach Anspruch 2, **dadurch gekennzeichnet, dass** die inerten Füllstoffe ausgewählt sind aus der Gruppe umfassend Citrin, Rosenquarz, Turmalin, Aventurin und Sodalith sowie Kombinationen hiervon.

4. Verwendungsfertige Innenraumbeschichtungszusammensetzung nach einem der Ansprüche 2 oder 3, **dadurch gekennzeichnet, dass** die inerten Füllstoffe eine Teilchengröße d-50% von zwischen 1 und 100 µm aufweisen.

5. Verwendungsfertige Innenraumbeschichtungszusammensetzung nach einem der Ansprüche 1 bis 4, **dadurch gekennzeichnet, dass** das Bindemittel ausgewählt ist aus der Gruppe umfassend Kunstharzdispersionen, Wasserglas, Kalkhydrat sowie Kombinationen hiervon.

6. Innenraumbeschichtung, hergestellt unter Verwendung der verwendungsfertigen Innenraumbeschichtungszusammensetzung nach einem der Ansprüche 1 bis 5, **dadurch gekennzeichnet, dass** sie im getrockneten Zustand eine Schichtdicke von durchschnittlich zwischen 0,15 und 1,5 mm aufweist, entsprechend einem Nassauftrag von zwischen 0,5 und 2,5 kg/m².

7. Tafelförmige Innenraumbeschichtung umfassend ein anorganisches Kolloid, ein Bindemittel und gegebenenfalls herkömmliche Hilfs- und Zusatzstoffe, **dadurch gekennzeichnet, dass** das anorganische Kolloid ausgewählt ist aus der Gruppe der ungebrannten Schichtsilikate, umfassend Kaolinit, Serpentin, Montmorillonit und Glimmer, wie beispielsweise Muskovit, Celadonit, Annit, Phlogopit, Illit, Glaukonit, Biotit und Lepidolith, sowie Kombinationen hiervon und eine Teilchengröße d-50% von zwischen 1 und 30 µm, vorzugsweise zwischen 5 und 15 µm, und eine relative Permittivität von 5 bis 30 im Frequenzbereich von 1 MHz - 200 MHz, gemessen im Bulk nach Konditionierung bei 25 °C und 30% relativer Luftfeuchtigkeit, aufweist und das Masseverhältnis zwischen anorganischem Kolloid und Bindemittel als Trockensubstanz größer als 2,5 zu 1 ist.

8. Tafelförmige Innenraumbeschichtung nach Anspruch 7, **dadurch gekennzeichnet, dass** die Beschichtung zusätzlich inerte Füllstoffe in einem Masseverhältnis zwischen anorganischem Kolloid und Füllstoff größer als 1 zu 3, vorzugsweise größer als 1 zu 2 und besonders bevorzugt größer als 4 zu 1 enthält.

9. Tafelförmige Innenraumbeschichtung nach Anspruch 8, **dadurch gekennzeichnet, dass** die inerten Füllstoffe ausgewählt sind aus der Gruppe umfassend Citrin, Rosenquarz, Turmalin, Aventurin und Sodalith sowie Kombinationen hiervon.

10. Tafelförmige Innenraumbeschichtung nach einem der Ansprüche 8 oder 9, **dadurch gekennzeichnet, dass** die inerten Füllstoffe eine Teilchengröße d-50% von zwischen 1 und 100 µm aufweisen.

11. Tafelförmige Innenraumbeschichtung nach einem der Ansprüche 7 bis 10, **dadurch gekennzeichnet, dass** das Bindemittel ausgewählt ist aus der Gruppe umfassend Kunstharzdispersionen, Wasserglas, Kalkhydrat sowie Kombinationen hiervon.

## Claims

1. A ready-to-use interior coating composition comprising an inorganic colloid, a binder, water as solvent or dispersion medium, and optionally conventional auxiliaries and additives, **characterised in that** the inorganic colloid is selected from the group of unfired sheet silicates, comprising kaolinite, serpentine, montmorillonite and mica, such as muscovite, celadonite, annite, phlogopite, illite, glauconite, biotite and lepidolite and also combinations thereof, and has a particle size d-50% of between 1 and 30 µm, preferably between 5 and 15 µm, and a relative permittivity from 5 to 30 in the frequency range of 1 MHz - 200 MHz, measured in bulk after conditioning at 25 °C and 30 % relative atmospheric humidity, and the mass ratio between inorganic colloid and binder as dry substance is greater than 2.5 to 1.

2. The ready-to-use interior coating composition according to claim 1, **characterised in that** the coating additionally contains inert fillers in a mass ratio between inorganic colloid and filler greater than 1 to 3, preferably greater than 1 to 2, and particularly preferably greater than 4 to 1.

3. The ready-to-use interior coating composition according to claim 2, **characterised in that** the inert fillers are selected from the group comprising citrine, rose quartz, tourmaline, aventurine and sodalite and also combinations thereof.

4. The ready-to-use interior coating composition according to one of claims 2 or 3, **characterised in that** the inert fillers have a particle size d-50% of between 1 and 100 µm.

5. The ready-to-use interior coating composition according to one of claims 1 to 4, **characterised in that** the binder is selected from the group comprising plastic resin dispersions, water glass, lime hydrate and also combinations thereof.

6. An interior coating, produced with use of the ready-to-use interior coating composition according to one of claims 1 to 5, **characterised in that** it has, in the dried state, a layer thickness of, on average, between 0.15 and 1.5 mm, corresponding to a wet application of between 0.5 and 2.5 kg/m².

7. A tabular interior coating comprising an inorganic colloid, a binder and optionally conventional auxiliaries and additives, **characterised in that** the inorganic colloid is selected from the group of unfired sheet silicates, comprising kaolinite, serpentine, montmorillonite and mica, such as muscovite, celadonite, annite, phlogopite, illite, glauconite, biotite and lepidolite and also combinations thereof, and has a particle size d-50% of between 1 and 30 µm, preferably between 5 and 15 µm, and a relative permittivity from 5 to 30 in the frequency range of 1 MHz - 200 MHz, measured in bulk after conditioning at 25 °C and 30 % relative atmospheric humidity, and the mass ratio between inorganic colloid and binder as dry substance is greater than 2.5 to 1.

8. The tabular interior coating according to claim 7, **characterised in that** the coating additionally contains inert fillers in a mass ratio between inorganic colloid and filler greater than 1 to 3, preferably greater than 1 to 2, and particularly preferably greater than 4 to 1.

9. The tabular interior coating according to claim 8, **characterised in that** the inert fillers are selected from the group comprising citrine, rose quartz, tourmaline, aventurine and sodalite and also combinations thereof.

10. The tabular interior coating according to one of claims 8 or 9, **characterised in that** the inert fillers have a particle size d-50% of between 1 and 100 µm.

11. The tabular interior coating according to one of claims 7 to 10, **characterised in that** the binder is selected from the group comprising plastic resin dispersions, water glass, lime hydrate and also combinations thereof.

## Revendications

1. Composition de revêtement d'intérieur prête à l'emploi, comprenant un colloïde inorganique, un liant, de l'eau en tant que solvant ou dispersant et éventuellement des adjuvants et additifs traditionnels, **caractérisée en ce que** le colloïde inorganique est choisi dans le groupe des silicates stratifiés non-calcinés, comprenant la kaolinite, la serpentine, la montmorillonite et le mica, comme par exemple la muscovite, la céladonite, l'annite, la phlogopite, l'illite, la glauconite, la biotite et la lépidolite, ainsi que les combinaisons de ceux-ci, et présente une granulométrie d-50 % comprise entre 1 et 30 µm, de préférence entre 5 et 15 µm, et une permittivité relative de 5 à 30 dans la gamme de fréquences de 1 à 200 MHz, mesurée en vrac après conditionnement à 25°C et en présence d'une humidité relative de l'air de 30 %, le rapport de masse entre le colloïde inorganique et le liant en tant que matière sèche étant supérieur à 2,5:1.

2. Composition de revêtement d'intérieur prête à l'emploi selon la revendication 1, **caractérisée en ce que** le revêtement contient en outre des matières de charge inertes selon un rapport de masse entre le colloïde inorganique et la matière de charge supérieur à 1:3, de préférence supérieur à 1:2, et d'une manière particulièrement préférée supérieur à 4:1.

3. Composition de revêtement d'intérieur prête à l'emploi selon la revendication 2, **caractérisée en ce que** les matières de charge inertes sont choisies dans le groupe comprenant la citrine, le quartz rose, la tourmaline, l'aventurine et la sodalite, ainsi que les combinaisons de ceux-ci.

4. Composition de revêtement d'intérieur prête à l'emploi selon l'une des revendications 2 ou 3, **caractérisée en ce que** les matières de charge inertes présentent une granulométrie d-50 % comprise entre 1 et 100 µm.

5. Composition de revêtement d'intérieur prête à l'emploi selon l'une des revendications 1 à 4, **caractérisée en ce que** le liant est choisi dans le groupe comprenant les dispersions de résine synthétique, le silicate de soude, l'hydroxyde de calcium, ainsi que les combinaisons de ceux-ci.

6. Revêtement d'intérieur, fabriqué par utilisation de la composition de revêtement d'intérieur prête à l'emploi selon l'une des revendications 1 à 5, **caractérisé en ce qu'**il présente à l'état sec une épaisseur de couche en moyenne comprise entre 0,15 et 1,5 mm, correspondant à une application au mouillé comprise entre 0,5 et 2,5 kg/m².

7. Revêtement d'intérieur sous forme de panneau comprenant un colloïde inorganique, un liant et éventuellement des adjuvants et additifs traditionnels, **caractérisé en ce que** le colloïde inorganique est choisi dans le groupe des silicates stratifiés non-calcinés, comprenant la kaolinite, la serpentine, la montmorillonite et le mica, comme par exemple la muscovite, la céladonite, l'annite, la phlogopite, l'illite, la glauconite, la biotite et la lépidolite, ainsi que les combinaisons de ceux-ci, et présente une granulométrie d-50 % comprise entre 1 et 30 µm, de préférence entre 5 et 15 µm, et une permittivité relative de 5 à 30 dans la gamme de fréquences de 1 à 200 MHz, mesurée en vrac après conditionnement à 25°C en présence d'une humidité relative de l'air de 30 %, le rapport de masse entre le colloïde inorganique et le liant en tant que matière sèche étant supérieur à 2,5:1.

8. Revêtement d'intérieur sous forme de panneau selon la revendication 7, **caractérisé en ce que** le revêtement contient en outre des matières de charge inertes selon un rapport de masse entre le colloïde inorganique et la matière de charge supérieur à 1:3, de préférence supérieur à 1:2 et d'une manière particulièrement préférée supérieur à 4:1.

9. Revêtement d'intérieur sous forme de panneau selon la revendication 8, **caractérisé en ce que** les matières de charge inertes sont choisies dans le groupe consistant en la citrine, le quartz rose, la tourmaline, l'aventurine et la sodalite, ainsi que les combinaisons de ceux-ci.

10. Revêtement d'intérieur sous forme de panneau selon l'une des revendications 8 ou 9, **caractérisé en ce que** les matières de charge inertes présentent une granulométrie d-50 % comprise entre 1 et 100 µm.

11. Revêtement d'intérieur sous forme de panneau selon l'une des revendications 7 à 10, **caractérisé en ce que** le liant est choisi dans le groupe comprenant les dispersions de résine synthétique, le silicate de soude, l'hydroxyde de calcium, ainsi que les combinaisons de ceux-ci.
